# EUROPÄISCHE PATENTSCHRIFT

(11) **EP 2 305 728 B1**
(45) Veröffentlichungstag und Bekanntmachung des Hinweises auf die Patenterteilung: **02.09.2015**
(21) Anmeldenummer: 09012497.5
(22) Anmeldetag: 02.10.2009
(51) Int. Cl.: C08G 18/32, C08G 18/48, C08G 18/71, C08G 59/00, C08L 63/00

(54) **Verdickungsmittel**
Thickening agent
Epaississant

(43) Veröffentlichungstag der Anmeldung: 06.04.2011
(73) Patentinhaber: Cognis IP Management GmbH, 40589 Düsseldorf (DE)
(72) Erfinder: Münzenberg, Cindy, 40239 Düsseldorf (DE); Wiethoff, Helena, 40221 Düsseldorf (DE)

(56) Entgegenhaltungen:
- US-A- 4 079 028
- US-A- 5 723 653
- US-A1- 2006 155 021

## Beschreibung

### Gebiet der Erfindung

Die Erfindung betrifft spezielle alkoxylierte Urethane sowei deren Verwendung als Verdickungsmittel.

### Stand der Technik

Urethane werden konventionell durch Umsetzung von Alkoholen mit Isocyanaten hergestellt. Das Charakteristikum dieser Stoffklasse, also der Urethane, ist die Urethangruppe -O-CO-NH-. Eine Alternative bei der Generierung von Urethangruppen ist die Umsetzung eines cyclischen Carbonates mit einen primären Amin. Die Besonderheit dieses synthetischen Zuganges zu Urethanen besteht darin, dass auf Isocyanate als Rohstoff verzichtet werden kann. Der Fachmann spricht bei Urethanen, die über die letztgenannte Syntheseroute zugänglich sind, von "non-isocyanate urethanes" (NICJs).

Assoziative Verdicker auf Polyurethanbasis sind lineare oder verzweigte, nicht-ionische Polymere mit hydrophilen und hydrophoben Segmenten. In zunehmenden Maße substituieren oder ergänzen sie die traditionell als Verdicker in Farben und Lacken eingesetzten Celluloseether sowie die alkalilöslichen Polyacrylate. Gegenüber diesen weisen die Polyurethanverdicker folgende Vorteile auf: geringere Viskosität beim Einarbeiten, geringere Spritzneigung beim Verstreichen, besserer Farbverlauf, höherer Glanz durch weniger Flokkulation, geringere Wasserempfindlichkeit der Beschichtungen, geringere Anfälligkeit gegen mikrobiellen Angriff, geringe Eigenviskosität in der Konfektionierungsform und daraus resultierend gute Dosierbarkeit, hohe Verdickungswirkung in den zu verdickenden Dispersionen, möglichst geringer Abfall der Viskosität in den verdickten Dispersionen unter Scherung, näherungsweise Newtonsches Fließverhalten.

Polyurethanlösungen oder -dispersionen in wasserverdünnbarer wässriger oder überwiegend wässriger Phase werden vom Fachmann als HEUR-Verdicker bezeichnet (das Akronym HEUR leitet sich von "nonionic hydrophobically modified ethylene oxide urethane block copolymer" ab) und bereits seit längerem in den unterschiedlichsten Anwendungsfeldern zur Verdickung wasserbasierter Dispersionsfarben eingesetzt. Die grundlegend in US 4079028 beschriebenen Verdickungsmittel sind aufgebaut aus linearen und/oder verzweigten Polyethylenglycol-Blöcken und Hydrophob-Segmenten, die in der Regel über Urethangruppen miteinander verknüpft sind.

Als Wirkprinzip wird angenommen, dass die Polyethylenglykol-Segmente die Wasserverträglichkeit sicherstellen und die Hydrophob-Segmente über eine Assoziation untereinander sowie mit dispergierten Bindemittelteilchen der zu verdickenden Dispersionsfarbe in dieser einen viskositätsgebenden dreidimensionalen Molekülverbund aufbauen.

Bevorzugte Hydrophobe gängiger Marktprodukte sind längerkettige, in der Regel monofunktionelle Alkohole, wie beispielsweise n-Octanol, n-Dodecanol, iso-Tridecylalkohol oder iso-Nonylphenol. Diese Alkohole kommen überwiegend als solche, aber auch in Form ihrer Additionsprodukte mit einigen wenigen Äquivalenten Ethylenoxid zum Einsatz. Die verwendeten mehrfunktionellen Isocyanate sind in der Regel difunktionell. Beispielsweise kommen Methylenbis-(4-cyclohexyl)diisoyanat, m/p-tetramethylenxylylendüsocyanat, Hexamethylendiisocyanat, 2,4-Toluylen-diisocyanat, Trimethylhexamethylendiisocyanat oder 4/2,4'-Diphenylmethan-diisocyanat zum Einsatz. Die verwendeten Polyethylenglycole sind in der Regel ebenfalls difunktionell und weisen Molekulargewichte im Bereich einiger Tausend Dalton, beispielsweise 4500 oder 10000 Dalton, auf.

### Beschreibung der Erfindung

Aufgabe der Erfindung war es, Verdickungsmittel bereitzustellen, die in etwa die guten anwendungstechnischen Eigenschaften von Polyurethanverdickungsmitteln aus dem Stand der Technik aufweisen. Die zu entwickelnden Verdickungsmittel sollten jedoch Isocyanat-frei sein.

Gegenstand der Erfindung ist die Verwendung von Verbindungen (V), erhältlich durch Umsetzung von
(a) Epoxiden (I), die mindestens zwei Epoxidgruppen pro Molekül enthalten mit
(b) Verbindungen der Struktur (II) 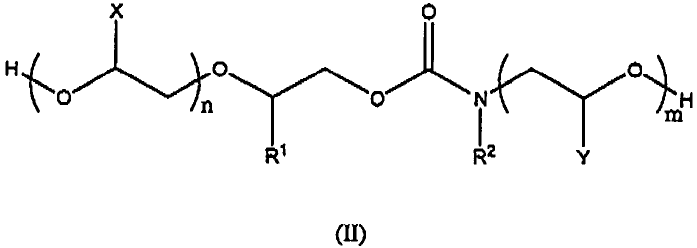 worin bedeuten:
   - R¹ Wasserstoff, einen Alkylrest mit 1 bis 3 C-Atomen oder eine Gruppe R³
   - R² eine Alkylgruppe mit 2 bis 22 C-Aomen, wobei dieser Rest linear oder verzweigt oder cyclisch sowie gesättigt oder ein- oder mehrfach olefinisch ungesättigt sein kann,
   - R³ ein gesättigter Alkylrest mit 1 bis 3 C-Atomen, wobei dieser Alkylrest an einem der C-Atome durch eine Gruppe -O-(CH₂-CHZ-O)ₚ-H substituiert ist
   - X, Y und Z unabhängig voneinander Wasserstoff- oder einen Methylrest,
   - n, m und p unabhängig voneinander eine Zahl im Bereich von 0 bis 45, mit der Maßgabe, dass mindestens einer der Indices n, m oder p größer als Null sein muss und der weiteren Maßgabe, dass die Summe n + m + p im Bereich von 2 bis 70 liegen muss, und
(c) Alkoholen (III) der Formel R⁴-OH, worin R⁴ ein Alkylrest mit 6 bis 22 C-Atomen bedeutet,
mit der Maßgabe, dass man das molare Verhältnis der Reaktanden (I) : (II) : (III) im Bereich von 1 : (1 bis 3) : (0,05 bis 1,95) einstellt,
als Verdickungsmittel.

In einer Ausführungsform wird auf einen Einsatz der Alkohole (III) bei der Herstellung der Verbindungen (V) verzichtet. Hiefür gilt:
Gegenstand der Erfindung ist die Verwendung von Verbindungen (V) als Verdickungsmittel, wobei die Verbindungen (V) erhältlich sind durch Umsetzung von
   (a) Epoxiden (I), die mindestens zwei Epoxidgruppen pro Molekül enthalten mit
   (b) Verbindungen der Struktur (II) 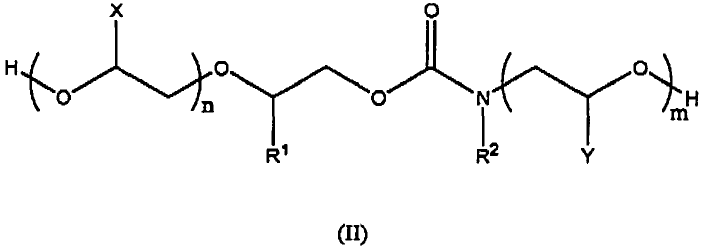
worin bedeuten:
- R¹ Wasserstoff, einen Alkylrest mit 1 bis 3 C-Atomen oder eine Gruppe R³
- R² eine Alkylgruppe mit 2 bis 22 C-Atomen, wobei dieser Rest linear oder verzweigt oder cyclisch sowie gesättigt oder ein- oder mehrfach olefinisch ungesättigt sein kann,
- R³ ein gesättigter Alkylrest mit 1 bis 3 C-Atomen, wobei dieser Alkylrest an einem der C-Atome durch eine Gruppe -O-(CH₂-CHZ-O)ₚ-H substituiert ist,
- X, Y und Z unabhängig voneinander Wasserstoff- oder einen Methylrest,
- n, m und p unabhängig voneinander eine Zahl im Bereich von 0 bis 45, mit der Maßgabe, dass mindestens einer der Indices n, m oder p größer als Null sein muss und der weiteren Maßgabe, dass die Summe n + m + p im Bereich von 2 bis 70 liegen muss,
mit der Maßgabe, dass man das molare Verhältnis der Reaktanden (I) : (II) im Bereich von 1 : (1 bis 3) einstellt. Vorzugsweise stellt man das molare Verhältnis der Reaktanden (I) : (II) im Bereich von 1 : (1,05 bis 1,10) ein.

Die erfindungsgemäß einzusetzenden Verbindungen (V) sind nicht-ionische Verbindungen, die in Wasser löslich oder dispergierbar sind.

Die Verbindungen (V) werden erfindungsgemäß als Verdickungsmittel eingesetzt. Dabei eignen sie sich in ganz besonderer Weise zur Verdickung von Dispersionsfarben und zur Verdickung von wässrigen Dispersionen.

### EO- und/oder PO-Bausteine

Die Verbindungen (II) enthalten Strukturelemente -(CH₂-CHX-O)ₙ-, -(CH₂-CHY-O)ₘ- und - (CH₂-CHZ-O)ₚ-, wobei die obigen Maßgaben gelten.

Es sei festgestellt, dass die verwendete Formelschreibweise ausdrücken soll, dass sich die genannten Strukturelemente von Ethylenoxid (EO) oder Propylenoxid (PO) ableiten, nämlich insofern, als sich - logischerweise für den Fall, dass die Indices m, n und p ungleich null sind - diese Bausteine synthetisch aus einer Addition von EO oder PO bzw. Ethylenglykol oder Propylenglykol (für n, m, p = 1) bzw. Polyaddition von EO und/oder PO bzw. Polyethylenglykol oder Polypropylenglykol oder entsprechenden gemischten EO-PO-Copolymeren (für n, m, p ≥ 2) resultieren. Es sei ferner ausdrücklich festgestellt, dass jedes dieser Strukturelemente - unabhängig voneinander - sowohl ausschließlich aus EO- als auch ausschließlich aus PO-Bausteinen aufgebaut sein kann, als auch EO- und PO-Bausteine in gemischter Form, blockweise oder statistisch verteilt, enthalten kann. Daher stellt die verwendete formelmäßige Darstellung der genannten Strukturelemente eine abkürzende Schreibweise für die genannten Möglichkeiten dar, welche dem kundigen Fachmann selbstverständlich sind.

So bedeutet etwa X = H und n = 5, dass das entsprechende Strukturelement fünf miteinander verknüpfte EO-Einheiten enthält, was einer Gruppierung -(O-CH₂-CH₂-)₅- entspricht; dagegen bedeutet X = CH₃ und n = 5, dass das Strukturelement fünf miteinander verknüpfte PO-Einheiten enthält, was einer Gruppierung -(O-CH₂-CH(CH₃))₅- entspricht, wobei - wie dem Fachmann bekannt - die Orientierung der Methylgruppe innerhalb des Struktwelements für jeden PO-Baustein in zweierlei Weise realisiert sein kann, nämlich als - (O-CH₂-CH(CH₃))-oder -(O-CH(CH)-CH₂)-.

Die Formel (II) ist im Rahmen der vorliegenden Erfindung so zu verstehen, dass EO- und PO-Bausteine auch innerhalb der genannten Strukturelemente gleichzeitig vorhanden sein können (was logischerweise voraussetzt, dass die Indizes dann jeweils mindestens die Zahl 2 bedeuten). Der Ausdruck "unabhängig voneinander" innerhalb des Terminus, dass "X, Y und Z unabhängig voneinander Wasserstoff- oder einen Methylrest" bedeuten, bezieht sich also nicht nur auf die genannten unterschiedlichen Strukturelemente, sondern gilt auch innerhalb ein- und desselben Strukturelementes.

### Zu den Verbindungen (I)

Bei den Verbindungen (I) handelt es sich um Epoxide, die mindestens zwei Epoxidgruppen pro Molekül enthalten.

Beispiel für geeignete Epoxide sind: Diglycidylether von Diolen oder Triglycidylether von Triolen, die den Alkoholen Ethylenglykol, Diethylenglykol, Triethylenglykol, 1,2-Propylenglykol, 1,3-Propylenglykol, 1,4-Butylenglykol, 1,5-pentandiol, 1,6-Hexadiol, Cyclohexandiol, Cyclohexandimethanol, Neopentylglykol, 1,2,6-Hexantriol, Gylcerin, Trimethylolpropan. Im Speziellen eignen sich die Epoxide der POLYOX®-Reihe der Firma UPPC (R3, R4, R5, R6, R7, R8, R9, R10, R11, R12, R14, R15, R16, R17, R18, R19, R20, R24) sowie 1,2-Ethandioldiglycidether und Polytetrahydrofurandiglycidylether.

In einer Ausführungsform setzt man solche Epoxide (I) ein, die zwei Epoxidgruppen pro Molekül enthalten. Vorzugsweise enthalten diese Epoxide die Oxirangruppen in terminalen Positionen des Moleküls.

In einer Ausführungsform setzt man solche Epoxide (I) ein, die drei Epoxidgruppen pro Molekül enthalten. Vorzugsweise enthalten diese Epoxide die Oxirangruppen in terminalen Positionen des Moleküls.

Es kann auch gewünscht sein, verschiedene Epoxide (I) im Gemisch untereinander einzusetzen.

### Zu den Verbindungen (II)

Bei dem Rest R² handelt es sich um eine Alkylgruppe mit 2 bis 18 und bevorzugt 6 bis 14 C-Atomen, wobei dieser Rest sein kann:
- einen linear oder verzweigt oder cyclisch,
- gesättigten oder ein- oder mehrfach olefinisch ungesättigt.

Beispielhaft seien folgende Alkylreste R² genannt: Lauryl (C12), Myristyl (C14), Cetyl (C16), Stearyl (C18), 2-Ethylhexyl.

In einer bevorzugten Ausführungsform handelt es sich bei den Alkylresten R² um Alkylreste, die gesättigt und verzweigt sind. Dabei ist der Rest 2-Ethylhexyl besonders bevorzugt.

In einer Ausführungsform ist der Rest R¹ Wasserstoff.

In einer Ausführungsform ist der Rest R¹ ein Alkylrest mit 1 bis 3 C-Atomen.

In einer Ausführungsform sind alle Reste X, Y und Z Wasserstoff.

In einer Ausführungsform ist die Summe n + m + p im Bereich von 5 bis 50 und insbesondere von 10 bis 25.

In einer Ausführungsform gilt: Der Rest R¹ ist Wasserstoff, der Rest R² ist ein gesättigter, verzweigter Alkylrest; alle Reste X, Y und Z sind Wasserstoff; die Summe n + m + p liegt im Bereich von 5 bis 50 und insbesondere von 10 bis 25. Logischerweise gilt für diese Ausführungsform, dass der Index p den Wert Null hat.

In einer Ausführungsform gilt: Der Rest R¹ ist eine Gruppe R³, wobei R³ die Bedeutung CH₂OH hat, der Rest R² ist ein gesättigter, verzweigter Alkylrest; alle Reste X, Y und Z sind Wasserstoff; die Summe n + m + p liegt im Bereich von 5 bis 50 und insbesondere von 10 bis 25.

In einer Ausführungsform gilt, dass n und m unabhängig voneinander eine Zahl im Bereich von 1 bis 45 bedeuten, insbesondere 3 bis 45, vorzugsweise 5 bis 45 und besonders bevorzugt 10 bis 45.

Die Verbindungen (II) lassen sich beispielsweise wie folgt herstellen: Cyclische Carbonate (1 mol) werden mit einem Überschuss an Amin (1,01 bis 5 mol, bevorzugt 1,05 bis 2.5 mol) umgesetzt. Dabei wird vorzugsweise das Amin vorgelegt, insbesondere bei etwa 45°C, und das cyclische Carbonat wird zugetropft, wobei die Temperatur während der Reaktion etwa 90 °C nicht überschreiten sollte. Vorzugsweise führt man die Umsetzung in einem Temperaturbereich von 60 bis 70°C. Nach beendeter Reaktion (daran erkennbar, dass die Aminzahl konstant bleibt) wird unter Vakuum das überschüssige Amin abgezogen. Die Ethoxylierung und/oder Propoxylierung des wie beschrieben erhaltenen Intermediates erfolgt unter Standardbedingungen (typischerweise KOH-katalysiert).

### Zu den Verbindungen (III)

Die Alkohole (III) haben die Formel R⁴-OH, worin R⁴ ein Alkylrest mit 6 bis 18 C-Atomen bedeutet. Dabei kann der Rest R⁴ linear oder verzweigt oder cyclisch sowie gesättigt oder ein- oder mehrfach olefinisch ungesättigt sein.

Bei den Alkoholen (III) handelt es sich um monofunktionelle Alkohole, die pro Molekül lediglich eine freie OH-Gruppe aufweisen. Diese ist vorzugsweise endständig. Verzweigte Alkohole (III) sind bevorzugt.

Ganz besonders bevorzugt als Alkohole (III) sind Guerbet-Alkohole. Diese sind dem Fachmann bekannt und werden durch die so genannte Guerbet-Reaktion gewonnen, eine seit mehr als 100 Jahren bekannte Dimerisiersreaktion, die nach folgendem Formelschema verläuft: 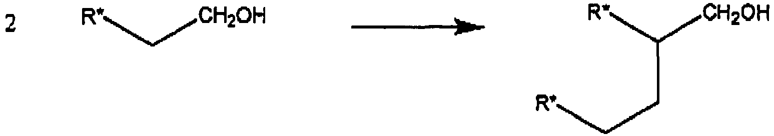 Dabei wird ein primärer aliphatischer Alkohol in einen (dimerisierten) primären Alkohol überführt, der in beta-Stellung zum C-Atom, das die OH-Gruppc trägt, alkyliert ist. Die Guer-bet-Reaktion verläuft in Gegenwart eines Katalysators bei erhöhter Temperatur unter Wasserabspaltung und stellt eine einfache Möglichkeit dar, lineare Alkohole in verzweigte Alkohole zu überführen. Im obigen Schema bedeutet R* eine aliphatische Gruppe. Diese kann linear oder verzweigt sein. Typischerweise setzt man nur einen Alkohol bei der Guerbetreaktion ein. Es ist jedoch auch möglich, zwei unterschiedliche primäre aliphatische Alkohole einzusetzen; in diesem Falle spricht man von einer gemischten Guerbetreaktion. Die historisch erste Reaktion der genannten Art wurde von Marcel Guerbet bereits im Jahre 1899 publiziert, der seinerzeit n-Butanol zu 2-Ethylhexan-1-ol dimerisiert hatte.

In einer Ausführungsform setzt man solche Alkohole (III) ein, die der Formel (III-a) genügen: 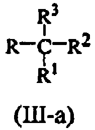 worin bedeuten:
- R ist ein Rest HO-CH₂-(CH₂)ₖ- mit k = 0 bis 4
- R¹ ist ein Rest CH₃-(CH₂)ₘ- mit m = 4 bis 14
- R² ist ein Rest CH₃-(CH₂)ₙ- mit n = 2 bis 10
- R³ ist ein Rest aus der Gruppe H-, CH₃- und C₂H₅-

Beispiele für besonders geeignete Alkohole (III-a) sind etwa Guerbet-Alkohole aus der Isofol-Serie der Firma Condea, beispielsweise 2-(n-Butyl)-octan-1-ol. Andere geeignete Guerbet-Alkohole sind solche, die durch Dimerisierung von Isoamylalkoholen, etwa von 3-Methylbutan-1-ol, erhältlich sind.

### Zur Herstellung der Verwindungen (V)

Die Umsetzung der Verbindungen (I), (II) und (III) bzw. (I) und (II) zu den erfindungsgemäß einzusetzenden Verbindungen (V) erfolgt vorzugsweise in Gegenwart eines Katalysators. Beispiele für geeignete Katalysatoren sind: Triflourmethansulfonsäure oder Anchor® 1040. Die Umsetzung der Verbindungen (I), (II) und (III) bzw. (I) und (II) zu den erfindungsgemäß einzusetzenden Verbindungen (V) erfolgt vorzugsweise in einem Temperaturbereich von 50 bis 200 °C und insbesondere 100 bis 180 °C.

Vorzugsweise wird innerhalb des oben genannten Rahmens das Verhältnis der Reaktanden (I) und (II) so gewählt, dass alle Oxirangruppen des Epoxids (I) abreagieren. Dies bedeutet in der Praxis ein stöchiometrisches Verhältnis der Summe der OH-Gruppen der Reaktanden und der Summe der Oxirangruppen der Reaktanden oder ein Verhältnis mit einem leichten Überschuss an OH-Gruppen im Bereich von etwa 5 bis 10 % (d.h. Summe der OH-Gruppen der Reaktanden zu Summe der Oxirangruppen der Reaktanden = 1 : (1,05 bis 1,10)).

### Verdickerkonzentrate

Ein weiterer Erfindungsgegenstand sind Verdickerkonzentrate enthaltend
(i) Wasser,
(ii) ein oder mehrere der oben beschriebenen Verdickungsmittel (V)
(iii) gegebenenfalls ein oder mehrere organische Lösungsmittel und/oder nicht-ionische Tenside vom Typ der Anlagerungsverbindungen von Ethylen- und/oder Propylenoxid an Fettalkohole mit 8 bis 22 C-Atomen.

Hinsichtlich Komponente (ii) gilt das oben bereits für die Verdickungsmittel (V) Gesagte.

Bei den organischen Lösungsmitteln (iii) handelt es sich um flüchtige organische Lösungsmittel. Beispiele hiefür sind niedermolekulare Alkohole wie Methanol, Ethanol, n-Propanol, i-Propanol, n-Butanol, i-Butanol, sec-Butanol, Ethandiol, Propandiol, Butandiol, Glycerin, Trimethylolpropan.

Als nicht-ionische Tenside vom Typ der Anlagerungsverbindungen von Ethylen- und/oder Propylenoxid an Fettalkohole mit 8-18 C-Atomen (iii) sind solche mit 2 bis 4 Mol Ethylenoxid pro Mol Fettalkohol bevorzugt, etwa Dehydol 04 (Handelsprodukt der Fa. Cognis).

Des weiteren betrifft die Erfindung die Verwendung der erfindungsgemäßen Verdickungsmittel bzw. Verdickerkonzentrate zur Verdickung wässriger Systeme, bevorzugt wässriger Dispersionen, ausgewählt aus der Gruppe bestehend aus wässrigen Kraftfahrzeug- und Industrielacken, Druck- und Textilfarben, Pigmentdruckpasten, wässrigen pharmazeutischen kosmetischen Formulierungen, Pflanzenschutzformulierungen, Füllstoff- und Pigmentdispersionen, Zubereitungen von Waschmitteln, Klebstoffen, Wachsen und Polituren sowie für die Erdölförderung, insbesondere zur Verdickung von wässrigen Putz- und Anstrichfarben in Dispersionsform.

## Patentansprüche

1. Verwendung von Verbindungen (V), erhältlich durch Umsetzung von
(a) Epoxiden (I), die mindestens zwei Epoxidgruppen pro Molekül enthalten mit
(b) Verbindungen der Struktur (II) 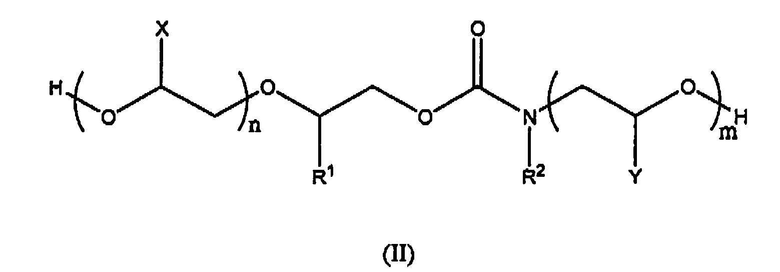 worin bedeuten:
• R¹ Wasserstoff, einen Alkylrest mit 1 bis 3 C-Atomen oder eine Gruppe R³
• R² eine Alkylgruppe mit 2 bis 22 C-Atomen, wobei dieser Rest linear oder verzweigt oder cyclisch sowie gesättigt oder ein- oder mehrfach olefinisch ungesättigt sein kann,
• R³ ein gesättigter Alkylrest mit 1 bis 3 C-Atomen, wobei dieser Alkylrest an einem der C-Atome durch eine Gruppe -O-(CH₂-CHZ-O)ₚ-H substituiert ist
• X, Y und Z unabhängig voneinander Wasserstoff oder einen Methylrest,
• n, m und p unabhängig voneinander eine Zahl im Bereich von 0 bis 45, mit der Maßgabe, dass mindestens einer der Indices n, m oder p größer als Null sein muss und der weiteren Maßgabe, dass die Summe n + m + p im Bereich von 2 bis 70 liegen muss, und
(c) Alkoholen (III) der Formel R⁴-OH, worin R⁴ ein Alkylrest mit 6 bis 22 C-Atomen bedeutet, mit der Maßgabe, dass man das molare Verhältnis der Reaktanden (I) : (II) : (III) im Bereich von 1 : (1 bis 3): (0,05 bis 1,95) einstellt,
als Verdickungsmittel.

2. Verwendung nach Anspruch 1, wobei man als Komponente (c) einen Guerbet-Alkohol einsetzt.

3. Verwendung nach Anspruch 2, wobei der Guerbet-Alkohol 2-(n-Butyl)-octan-1-ol ist.

4. Verdickerkonzentrate enthaltend
(i) Wasser,
(ii) ein oder mehrere der Verbindungen (V) gemäß Anspruch 1 und
(iii) gegebenenfalls ein oder mehrere organische Lösungsmittel und/oder nicht-ionische Tenside vom Typ der Anlagerungsverbindungen von Ethylen- und/oder Propylenoxid an Fettalkohole mit 8 bis 22 C-Atomen.

## Claims

1. The use of compounds (V) as thickeners, obtainable by reacting
(a) epoxides (I) comprising at least two epoxide groups per molecule with
(b) compounds of the structure (II) 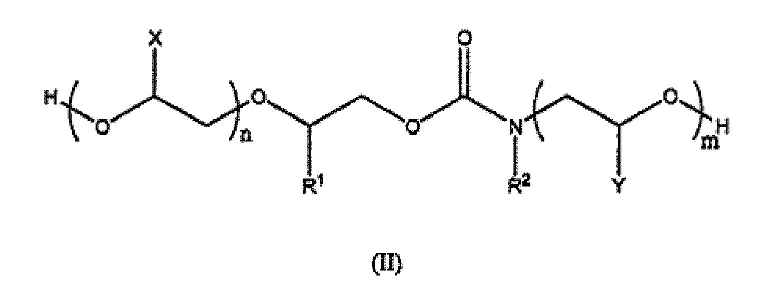 where
• R¹ is hydrogen, an alkyl residue having 1 to 3 carbon atoms or a group R³
• R² is an alkyl group having 2 to 22 carbon atoms, wherein said residue may be linear or branched or cyclic and also saturated or mono- or polyolefinically unsaturated
• R³ is a saturated alkyl residue having 1 to 3 carbon atoms, wherein said alkyl residue is substituted on one of the carbon atoms by a group -O-(CH₂-CHZ-O)ₚ-H
• X, Y and Z are each independently hydrogen or a methyl residue,
• n, m and p are each independently a number in the range of 0 to 45, with the proviso that at least one of the indices n, m or p must be greater than zero and the further proviso that the sum of n + m + p must be in the range of 2 to 70, and
(c) alcohols (III) of the formula R⁴-OH, wherein R⁴ is an alkyl residue having 6 to 22 carbon atoms, with the proviso that the molar ratio of the reactants (I):(II):(III) is set in the range of 1: (1 to 3) : (0.05 to 1.95).

2. The use according to claim 1, wherein a Guerbet alcohol is used as component (c).

3. The use according to claim 2, wherein the Guerbet alcohol is 2-(n-butyl)octan-1-ol.

4. A thickener concentrate comprising
(i) water,
(ii) one or more than one compound (V) according to claim 1,
(iii) optionally one or more organic solvents and/or non-ionic surfactants of the type of the addition compounds of ethylene oxide and/or propylene oxide onto fatty alcohols having 8 to 22 carbon atoms.

## Revendications

1. Utilisation de composes (V), pouvant être obtenus par mise en réaction de
(a) des époxydes (I), qui contiennent au moins deux groupes époxyde par molécule, avec
(b) des composés de structure (II) 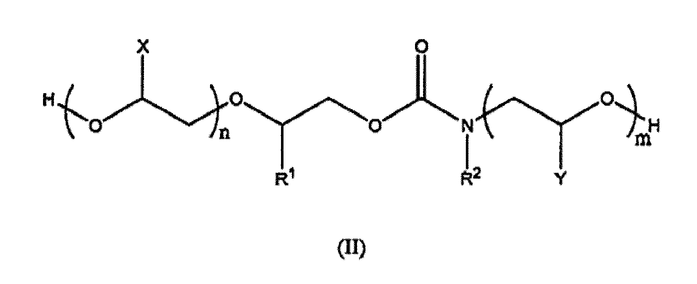 dans laquelle :
- R¹ signifie l'hydrogène, un radical alkyle de 1 à 3 atomes C ou un groupe R³,
- R² signifie un groupe alkyle de 2 à 22 atomes C, ce radical pouvant être linéaire ou ramifié ou cyclique, ainsi que saturé ou mono- ou polyinsaturé oléfiniquement,
- R³ signifie un radical alkyle saturé de 1 à 3 atomes C, ce radical alkyle étant substitué sur un des atomes C par un groupe -O-(CH₂-CHZ-O)ₚ-H,
- X, Y et Z signifient indépendamment les uns des autres l'hydrogène ou un radical méthyle,
- n, m et p signifient indépendamment les uns des autres un nombre de 0 à 45, à condition qu'au moins un des indices n, m ou p soit supérieur à zéro et également à condition que la somme n + m + p se situe dans la plage allant de 2 à 70, et
(c) des alcools (III) de formule R⁴-OH, R⁴ signifiant un radical alkyle de 6 à 22 atomes C,
à condition que le rapport molaire entre les réactifs (I) : (II) : (III) soit ajusté dans la plage de 1: (1 à 3) : (0, 05 à 1, 95),
en tant qu'épaississant.

2. Utilisation selon la revendication 1, dans laquelle un alcool de Guerbet est utilisé en tant que composant (c).

3. Utilisation selon la revendication 2, dans laquelle l'alcool de Guerbet est le 2-(n-butyl)-octan-1-ol.

4. Concentré épaississant, contenant :
(i) de l'eau,
(ii) un ou plusieurs des composés (V) selon la revendication 1, et
(iii) éventuellement un ou plusieurs solvants organiques et/ou tensioactifs non ioniques du type des composés d'addition d'oxyde d'éthylène et/ou de propylène sur des alcools gras de 8 à 22 atomes C.
